# EUROPEAN PATENT APPLICATION

(11) **EP 4 654 428 A1**
(43) Date of publication of application: **26.11.2025**
(21) Application number: 24797252.4
(22) Date of filing: 22.02.2024
(51) Int. Cl.: H02J 7/00, G06F 1/3296, G06F 1/3228, H02J 9/00

(54) **METHOD OF PROVIDING POWER AND ELECTRONIC DEVICE PERFORMING SAME METHOD**

(30) Priority: 28.04.2023 KR 20230056365; 08.06.2023 KR 20230073551
(71) Applicant: Samsung Electronics Co., Ltd., Suwon-si, Gyeonggi-do 16677 (KR)
(72) Inventor: HWANG, Insung, Suwon-si Gyeonggi-do 16677 (KR); KIM, Sangju, Suwon-si Gyeonggi-do 16677 (KR)
(74) Representative: Gulde & Partner
(86) International application number: PCT/KR2024/002290
(87) International publication number: WO 2024/225590

(57) **Abstract**

A method for supplying power and an electronic device for performing the method are disclosed. An electronic device according to various embodiments may be connected to an external power supply device capable of supplying power in a plurality of power supply modes, and may comprise a processor and an interface enabling communication with the external power supply device. When a connection of the external power supply device is detected via the interface, the processor may receive power information corresponding to the plurality of power supply modes from the external power supply device. On the basis of the power information, the processor may configure the interface to cause power to be supplied in a first power mode, which has a maximum magnitude of power that can be supplied, among the plurality of power supply modes. The processor may determine power consumed by the electronic device while receiving power in the first power mode. When power consumed by the electronic device for a configured first time period in the first power mode is less than a first power configured corresponding to the first power mode, the processor may configure the interface to cause power to be supplied in a second power mode having a smaller magnitude of power that can be supplied compared to the first power mode.

## Description

### TECHNICAL FIELD

The disclosure below relates to a method of supplying power and an electronic device for performing the method.

### BACKGROUND ART

Standby power refers to power consumed even when an external power supply device is connected in a state in which an electronic device is powered off.

Standby power should be minimized to prevent loss due to unnecessary power consumed even though an electronic device is not used.

When an external power supply device is connected to an electronic device, the electronic device may communicate with the external power supply device and determine the voltage and current of power to be supplied. An electronic device may control a switch connected to a connecting terminal (or a port) to which an external power supply device is connected and may supply external power to charging circuitry. An electronic device may charge a battery or supply power required for a system by converting power supplied to charging circuitry.

### DISCLOSURE OF THE INVENTION

### TECHNICAL SOLUTIONS

An electronic device, according to various embodiments, includes an interface connected to an external power supply device capable of supplying power in a plurality of power supply modes and configured to communicate with the external power supply device and a processor. The processor is configured to receive, from the external power supply device, power information corresponding to a plurality of power supply modes when a connection of the external power supply device is detected through the interface. The processor is configured to, based on the power information, set, among the plurality of power supply modes, the interface to supply power in a first power mode in which a magnitude of power capable of being supplied is the maximum. The processor is configured to determine power consumed by the electronic device while receiving power in the first power mode. In the first power mode, the processor is configured to set the interface to supply power in a second power mode in which a magnitude of power capable of being supplied is smaller than that of the first power mode when power consumed by the electronic device during a set first time is less than first power that is set corresponding to the first power mode.

An electronic device, according to various embodiments, includes an interface connected to an external power supply device capable of supplying power in a plurality of power supply modes and configured to communicate with the external power supply device and a processor. The processor is configured to receive, from the external power supply device, power information corresponding to a plurality of power supply modes when a connection of the external power supply device is detected through the interface. The processor is configured to determine pieces of reference power corresponding to the plurality of power supply modes based on the power information. The processor is configured to determine, among the plurality of power supply modes, a power supply mode based on the pieces of reference power and power consumed by the electronic device during a set time. The processor is configured to set the interface according to the determined power supply mode.

A method of supplying power, according to various embodiments, includes, when a connection of an external power supply device is detected through an interface, receiving, from the external power supply device, power information corresponding to a plurality of power supply modes, based on the power information, setting, among the plurality of power supply modes, the interface to supply power in a first power mode in which a magnitude of power capable of being supplied is the maximum, determining power consumed by the electronic device while receiving power in the first power mode, and in the first power mode, setting the interface to supply power in a second power mode in which a magnitude of power capable of being supplied is smaller than that of the first power mode when power consumed by the electronic device during a set first time is less than first power that is set corresponding to the first power mode, in which the interface is connected to the external power supply device capable of supplying power in a plurality of power supply modes and is configured to communicate with the external power supply device.

### BRIEF DESCRIPTION OF DRAWINGS

FIG. 1 is a block diagram illustrating an electronic device in a network environment, according to various embodiments.
FIG. 2 is a block diagram illustrating a power management module and a battery, according to various embodiments.
FIG. 3 is a diagram illustrating a power supply mode according to various embodiments.
FIG. 4 is a schematic block diagram illustrating an electronic device according to various embodiments.
FIG. 5 is a diagram illustrating an operation of a power supply method, according to various embodiments.
FIG. 6 is a diagram illustrating an operation of an electronic device for setting a power mode according to a magnitude of power consumed in a second power mode, according to various embodiments.
FIG. 7 is a diagram illustrating an operation of an electronic device for setting a power mode according to an operation mode or whether to recharge a battery, according to various embodiments.
FIGS. 8 and 9 are diagrams illustrating power modes according to various embodiments.
FIG. 10 is a diagram illustrating an operation of setting a power mode according to power consumed by an electronic device, according to various embodiments.
FIG. 11 is a diagram illustrating an operation of an electronic device for setting a power mode from a third power mode to a first power mode, according to various embodiments.

### BEST MODE FOR CARRYING OUT THE INVENTION

Hereinafter, embodiments will be described in detail with reference to the accompanying drawings. When describing the embodiments with reference to the accompanying drawings, like reference numerals refer to like components and a repeated description related thereto will be omitted.

As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof.

The operations may be performed sequentially but not necessarily. For example, the order of the operations may be changed and at least two of the operations may be performed in parallel.

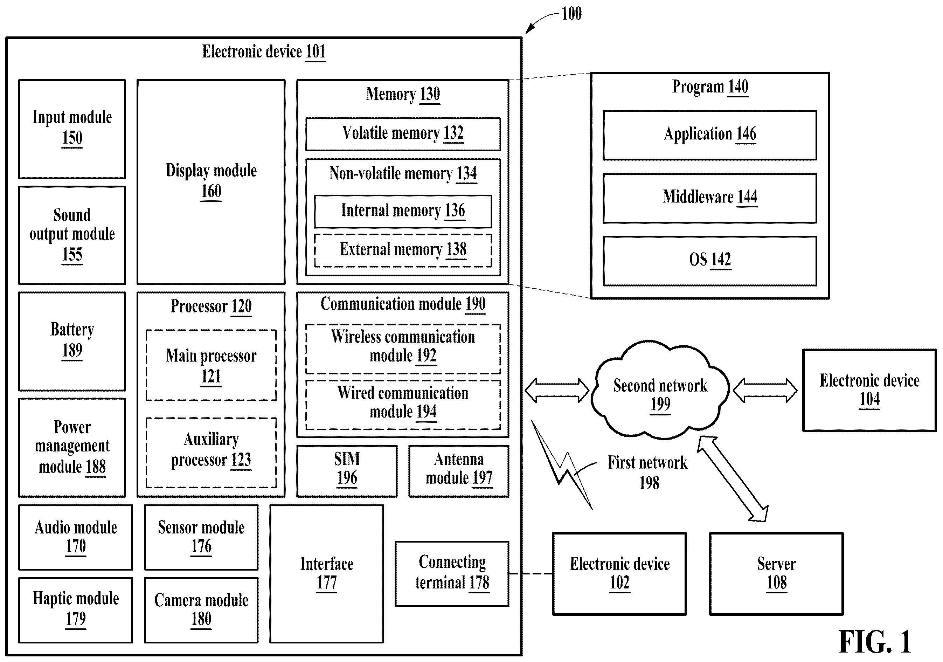

FIG. 1 is a block diagram illustrating an electronic device 101 in a network environment 100, according to various embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence model processing. An AI model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a record. The receiver may be used to receive an incoming call. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to sense a touch, or a pressure sensor adapted to measure the intensity of force incurred by the touch.

The audio module 170 may convert a sound into an electrical signal or vice versa. According to an embodiment, the audio module 170 may obtain the sound via the input module 150 or output the sound via the sound output module 155 or an external electronic device (e.g., the electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify or authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a fourth generation (4G) network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to embodiments, the antenna module 197 may form a mm Wave antenna module. According to an embodiment, the mmWave antenna module may include a PCB, an RFIC disposed on a first surface (e.g., a bottom surface) of the PCB or adjacent to the first surface and capable of supporting a designated high-frequency band (e.g., a mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed at the electronic device 101 may be executed at one or more external electronic devices (e.g., the external devices 102 and 104, or the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To this end, cloud computing, distributed computing, mobile edge computing (MEC), or client-server computing technology may be used, for example. The electronic device 101 may provide ultra low-latency services using, e.g., distributed computing or MEC. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

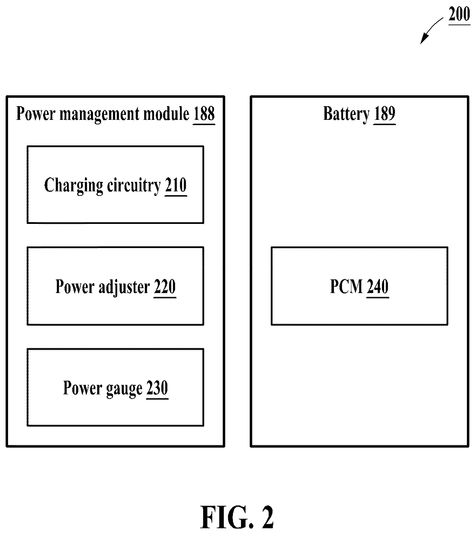

FIG. 2 is a block diagram 200 illustrating the power management module 188 and the battery 189, according to various embodiments. Referring to FIG. 2, the power management module 188 may include charging circuitry 210, a power adjuster 220, or a power gauge 230. The charging circuitry 210 may charge the battery 189 using power supplied from an external power source outside the electronic device 101. According to an embodiment, the charging circuitry 210 may select a charging scheme (e.g., normal charging or quick charging) based at least in part on a type of the external power source (e.g., a power outlet, a USB, or wireless charging), a magnitude of power suppliable from the external power source (e.g., about 20 watts (W) or more), or an attribute of the battery 189 and may charge the battery 189 using the selected charging scheme. The external power source may be connected to the electronic device 101, for example, wiredly via the connecting terminal 178 or wirelessly via the antenna module 197.

The power adjuster 220 may generate pieces of power having different voltage levels or different current levels by adjusting a voltage level or a current level of the power supplied from the external power source or the battery 189. The power adjuster 220 may adjust the voltage level or the current level of the power supplied from the external power source or the battery 189 into a different voltage level or current level appropriate for each of some of the components included in the electronic device 101. According to an embodiment, the power adjuster 220 may be implemented in the form of a low-drop-out (LDO) regulator or a switching regulator. The power gauge 230 may measure use state information about the battery 189 (e.g., a capacity, a number of times of charging or discharging, voltage, or a temperature of the battery 189).

The power management module 188 may determine, using, for example, the charging circuitry 210, the power adjuster 220, or the power gauge 230, charging state information (e.g., lifetime, over voltage, low voltage, over current, over charge, over discharge, overheat, short, or swelling) related to the charging of the battery 189 based at least in part on the measured use state information about the battery 189. The power management module 188 may determine whether the state of the battery 189 is normal or abnormal based at least in part on the determined charging state information. If the state of the battery 189 is determined to be abnormal, the power management module 188 may adjust the charging of the battery 189 (e.g., reduce the charging current or voltage or stop the charging). According to an embodiment, at least some of the functions of the power management module 188 may be performed by an external control device (e.g., the processor 120)

According to an embodiment, the battery 189 may include a protection circuit module (PCM) 240. The PCM 240 may perform one or more of various functions (e.g., a pre-cutoff function) to prevent performance deterioration of or damage to the battery 189. The PCM 240, additionally or alternatively, may be configured as at least part of a battery management system (BMS) capable of performing various functions including cell balancing, measurement of a battery capacity, count of a number of times of charging or discharging, measurement of a temperature, or measurement of voltage.

According to an embodiment, at least part of the charging state information or use state information regarding the battery 189 may be measured using a corresponding sensor (e.g., a temperature sensor) of the sensor module 176, the power gauge 230, or the power management module 188. According to an embodiment, the corresponding sensor (e.g., the temperature sensor) of the sensor module 176 may be included as part of the PCM 140 or may be disposed near the battery 189 as a separate device.

When an external power supply device is connected to an electronic device, the electronic device may perform a contract (e.g., a power delivery (PD) contract) with desired power through a negotiation (e.g., a PD negotiation).

For example, when the contract is performed in a power mode that may supply the rated power of 65 W, the electronic device may receive power according to the power mode that may supply the rated power of 65 W even when the power consumed by the electronic device is low. When the electronic device is in a standby state or a power-off state, the magnitude of the power consumed by the electronic device may be extremely small compared to the magnitude of the rated power of the contracted power mode.

As shown in Table 1 below, it may be seen that the magnitude of standby power consumed by the electronic device and the external power supply device decreases as the magnitude of the rated power supplied from the external power supply device decreases or the magnitude of the rated voltage decreases. In Table 1 below, power delivery object (PDO)_1, PDO_2, PDO_3, and PDO_4 may each correspond to a power mode. For example, PDO_4 may be referred to as a first power mode, PDO_3 as a second power mode, PDO_2 as a third power mode, and PDO_4 as a fourth power mode.

**Table 1]**

| | Rated Voltage/Current | Rated Power (W) | Standby Power (W) | External Power Supply Device + Electronic Device (power-off state) Standby Power (W) |
|---|---|---|---|---|
| No Connect | | | 0.025 | - |
| PDO_1 | 5V/3A | 15 | 0.041 | 0.2266 |
| PDO_2 | 9V/3A | 27 | 0.11 | 0.2830 |
| PDO_3 | 15V/3A | 45 | 0.2 | 0.3680 |
| | | | | |
| PDO_4 | 20V/3.25A | 65 | 0.287 | 0.426 |

When the electronic device continuously receives power from the external power supply device according to the contracted power mode (e.g., the first power mode, PDO_4) and in the power-off state, the magnitude (0.426 W) of standby power (of the external power supply device and the electronic device) may be large, as shown in Table 1.

When the electronic device according to an embodiment continuously receives power from the external power supply device according to the contracted power mode (e.g., the first power mode, PDO_4) and in the power-off state or standby state, the electronic device may receive, by negotiating with the external power supply device according to the magnitude of the power consumed by the electronic device, power in the power mode (e.g., the second power mode, the third power mode, and the fourth power mode, PDO_3, PDO_2, PDO_1) in which the magnitude of rated power is small. The electronic device may control the power mode according to the magnitude of power consumed, thereby reducing or improving the magnitude of the standby power.

As shown in Table 1 above, when power is supplied in the fourth power mode PDO_1, it may be seen that the magnitude of the standby power (of the external power supply device and the electronic device) decreases to 0.2266 W.

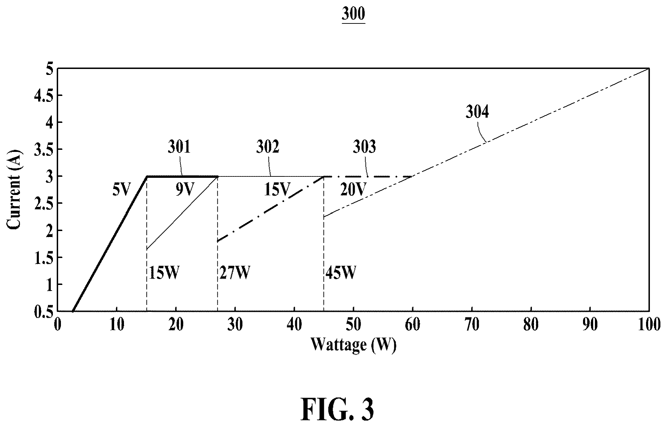

FIG. 3 is a diagram illustrating a power supply mode according to various embodiments.

Referring to FIG. 3, an electronic device (e.g., the electronic device 101 of FIG. 1) according to an embodiment may receive power from an external power supply device according to a set power mode among a plurality of power supply modes. For example, the power mode may refer to a mode in which the external power supply device supplies, to the electronic device 101, the power less than or equal to the rated current that is set for the power mode.

A fourth power mode 301 may refer to a power supply mode set to the rated voltage of 5 volts (V), rated current of 3 amperes (A), and rated power of 15 W.

A third power mode 302 may refer to a power supply mode set to the rated voltage of 9 V, rated current of 3 A, and rated power of 27 W. For example, the reference power set corresponding to the third power mode 302 may be set to the rated power of 15 W of the fourth power mode 301.

The second power mode 303 may refer to a power supply mode set to the rated voltage of 15 V, rated current of 3 A, and rated power of 45 W. For example, the reference power set corresponding to the second power mode 303 may be set to the rated power of 27 W of the third power mode 302.

A first power mode 304 may refer to a power supply mode set to the rated voltage of 20 V, rated current of 3.25 A, and rated power of 65 W. For example, the reference power set corresponding to the first power mode 304 may be set to the rated power of 45 W of the second power mode 303.

When a connection of the external power supply device is detected, the electronic device 101 may receive, among the plurality of power supply modes, power in the power mode in which the magnitude of supply power is the maximum through a negotiation with the external power supply device. For example, when the external power supply device may supply power in one of the first power mode 304, the second power mode 303, the third power mode 302, and the fourth power mode 301, the electronic device 101 may receive power in the first power mode 304.

While receiving power in the first power mode 304, the electronic device 101 may set an interface to receive power in the second power mode 303 according to the magnitude of power consumed.

While receiving power in the second power mode 303, the electronic device 101 may set the interface to receive power in the third power mode 302 or the first power mode 304 according to the magnitude of power consumed.

While receiving power in the third power mode 302, the electronic device 101 may set the interface to receive power in the fourth power mode 301, the second power mode 303, or the first power mode 304 according to the magnitude of power consumed.

While receiving power in the fourth power mode 301, the electronic device 101 may set the interface to receive power in the third power mode 302, the second power mode 303, or the first power mode 304 according to the magnitude of power consumed.

The plurality of power supply modes shown in FIG. 3 is an example of various embodiments, and the plurality of power supply modes may be set to the rated voltage, rated current, and rated power, which are different from the plurality of power supply modes shown in FIG. 3. Additionally, although the plurality of power supply modes shown in FIG. 3 represents four power modes, the plurality of power supply modes may be set in a different number from the example shown in FIG. 3.

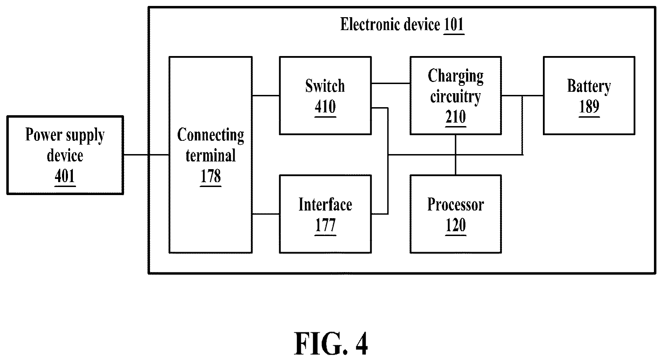

The power supply mode may be set according to the power transmission standard, such as a USB PD 3.0, 3.1, but is not limited thereto and may be set in various ways. For example, the description of the electronic device 101 of FIGS. 4 to 11 below may be substantially equally applied to a power supply device and the electronic device 101, which support a programmable power supply (PPS) that may set the rated voltage, rated current, and rated power of the power mode.

FIG. 4 is a schematic block diagram illustrating the electronic device 101 (e.g., the electronic device 101 of FIG. 1) according to various embodiments.

Referring to FIG. 4, the electronic device 101 may include the connecting terminal 178 (e.g., the connecting terminal 178 of FIG. 1), a switch 410, the interface 177 (e.g., the interface 177 of FIG. 1), the charging circuitry 210 (e.g., the charging circuitry 210 of FIG. 2), and the processor 120 (e.g., the processor 120 of FIG. 1).

The electronic device 101 may communicate with a power supply device 401 through the interface 177. The electronic device 101 may set the interface 177 such that the power supply device 401 supplies power in one of a plurality of power supply modes.

For example, the interface 177 may communicate with the power supply device 401 or the external electronic device 101, which is connected to the connecting terminal 178, through a configuration channel (CC). For example, the connecting terminal 178 may include a CC pin, and the interface 177 may communicate with the power supply device 401 or the external electronic device 101 through the CC pin. For example, the interface 177 may include a USB PD controller.

The connecting terminal 178 may include a USB type-C connector. The power supply device 401 or the external electronic device 101 may be connected to the connecting terminal 178. The electronic device 101 may perform data communication, power supply, and/or image signal transmission and reception through the power supply device 401 or the external electronic device 101, which is connected to the connecting terminal 178, and the interface 177. The interface 177 may control the power supply device 401 or the external electronic device 101, which is connected to the connecting terminal 178.

The processor 120 may detect, through the interface 177, whether the power supply device 401 is connected to the electronic device 101 through the connecting terminal 178. According to whether the power supply device 401 is connected, the processor 120 may control the switch 410. For example, when the power supply device 401 is connected, the processor 120 may control the switch 410 to be in the on state. When the switch 410 is in the on state, power input from the power supply device 401 may be supplied to the charging circuitry 210.

The charging circuitry 210 may convert power input from the power supply device 401, charge the battery 189, and supply power required for a system and/or element (e.g., the processor 120, a memory (e.g., the memory 130 of FIG. 1), a display module (e.g., the display module 160 of FIG. 1), and the like) of the electronic device 101.

When the power supply device 401 is not connected, the battery 189 may supply power required for the system and/or element of the electronic device 101. Additionally, when the magnitude of the power required for the system and/or element of the electronic device 101 is larger than the magnitude of the power input from the power supply device 401, the battery 189 may supply power to the system and/or element of the electronic device 101.

The processor 120 may communicate with the interface 177 through an inter-integrated circuit (I2C). The processor 120 may receive information of the power supply device 401 or the external electronic device 101, which is connected to the connecting terminal 178, through the interface 177. For example, the processor 120 may receive information on the power mode that may be supplied by the power supply device 401. The information on the power mode may include a power data object (PDO). The PDO may include information on the rated voltage, rated current, and rated power.

The processor 120 may determine the magnitude of the power consumed by the electronic device 101 using the charging circuitry 210. For example, the processor 120 may identify the size of current Isys input to the system and/or element using resistance (e.g., shunt resistance) included in the charging circuitry 210. When the size of the current input to the system or element is Isys, the size of the current input to the battery 189 (when the battery 189 is being charged) is Ibat, and the voltage of the battery 189 is Vbat, the magnitude of the power consumed by the electronic device 101 may be Vbat*Ibat + Vsys*Isys, and since Vsys is equal to Vbat, the magnitude of the power consumed by the electronic device 101 may be calculated as Vbat(Isys + Ibat). The processor 120 may determine the magnitude of the power consumed by the electronic device 101 using the measured Vbat, Vsys, Ibat, and Isys.

When the power is supplied from the battery 189 to the system and/or element of the electronic device 101, the magnitude of the power consumed by the electronic device 101 may be calculated as Vbat*Isys.

When the connection of the power supply device 401 is detected through the interface 177, the electronic device 101 may receive, from the power supply device 401, power information corresponding to the plurality of power supply modes. For example, the power information may include the PDO.

Based on the power information, the processor 120 may set, among the plurality of power supply modes, the interface 177 to supply power in a first power mode (e.g., the first power mode 304 of FIG. 3) in which the magnitude of the power that may be supplied is the maximum.

For example, when the power supply mode in which the power supply device 401 may operate is the first power mode 304 of FIG. 3, a second power mode (e.g., the second power mode 303 of FIG. 3), a third power mode (e.g., the third power mode 302 of FIG. 3), or a fourth power mode (e.g., the fourth power mode 301 of FIG. 3), the processor 120 may set the interface 177 to supply power according to the first power mode 304.

When the power supply device 401 is initially connected to the electronic device 101, the power supply device 401 may be set to a power supply mode in which the power that may be supplied is the maximum. When the power supply device 401 is initially connected to the electronic device 101, the electronic device 101 may perform a negotiation and contract to supply power according to the power supply mode in which the power that may be supplied by the power supply device 401 is the maximum.

The processor 120 may determine the power consumed by the electronic device 101 while receiving power in the first power mode 304. For example, the processor 120 may monitor the power consumed by the electronic device 101 using Vsys (the voltage of power input to the system and/or element), Isys (the current of power input to the system and/or element), Vbat (the voltage of the battery 189), and Ibat (the current input to the battery 189).

The processor 120 may set the interface 177 to supply power in the second power mode 303 in which the magnitude of the power that may be supplied is smaller than that of the first power mode 304 when the power consumed by the electronic device 101 during a set first time in the first power mode 304 is less than first power set corresponding to the first power mode 304.

For example, when the first power set corresponding to the first power mode 304 is 45 W and the power consumed by the electronic device 101 during the first time in the first power mode 304 is less than 45 W, the processor 120 may set the interface 177 to supply power in the second power mode 303 having the rated power of 45 W. The interface 177 may set the power supply device 401 to supply power in the second power mode 303 by communicating with the power supply device 401.

The processor 120 may set the interface 177 based on the average power consumed by the electronic device 101 during the first time in the first power mode 304. For example, when the average power consumed by the electronic device 101 for 1 second in the first power mode 304 is less than 45 W, the processor 120 may set the interface 177 to supply power in the second power mode 303.

For example, when the processor 120 measures the magnitude of the power consumed by the electronic device 101 at a 0.1 seconds cycle in the first power mode 304, the average power consumed by the electronic device 101 for 0 to 1 second is 45.5 W, and the average power consumed by the electronic device 101 for 0.5 to 1.5 seconds is 44.8 W, the processor 120 may set the interface 177 to supply power in the second power mode 303 at 1.5 seconds.

The processor 120 may determine the power consumed by the electronic device 101 while receiving power in the second power mode 303.

The processor 120 may set the interface 177 to supply power in the third power mode 302 in which the magnitude of the power that may be supplied is smaller than that of the second power mode 303 when the power consumed by the electronic device 101 during the first time in the second power mode 303 is less than second power set corresponding to the second power mode 303.

For example, when the second power set corresponding to the second power mode 303 is 27 W and the power consumed by the electronic device 101 during the first time in the second power mode 303 is less than 27 W, the processor 120 may set the interface 177 to supply power in the third power mode 302. The interface 177 may set the power supply device 401 to supply power in the third power mode 302 by communicating with the power supply device 401.

The processor 120 may set the interface 177 based on the average power consumed by the electronic device 101 during the first time in the second power mode 303. For example, when the average power consumed by the electronic device 101 for 1 second in the second power mode 303 is less than 27 W, the processor 120 may set the interface 177 to supply power in the third power mode 302.

The processor 120 may set the interface 177 to supply power in the first power mode 304 when the power consumed by the electronic device 101 during a second time, which is shorter than the first time, in the second power mode 303 is greater than or equal to the first power. For example, when the power consumed by the electronic device 101 during the second time in the second power mode 303 is greater than or equal to 45 W, the processor 120 may set the interface 177 to supply power in the first power mode 304.

For example, the processor 120 may set the interface 177 based on the average power consumed by the electronic device 101 during the second time in the second power mode 303. For example, when the average power consumed by the electronic device 101 during the second time in the second power mode 303 is greater than or equal to the first power, the processor 120 may set the interface 177 to supply power in the first power mode 304.

For example, when the pieces of power consumed by the electronic device 101 detected during the second time in the second power mode 303 are greater than or equal to the first power, the processor 120 may set the interface 177 to supply power in the first power mode 304.

The power consumed may be measured every 0.1 seconds, and when the second time is 0.5 seconds, the power consumed by the electronic device 101 may be measured at t+0.1 seconds, t+0.2 seconds, t+0.3 seconds, t+0.4, and t+0.5 seconds. When the pieces of measured power consumed by the electronic device 101 at t+0.1 seconds, t+0.2 seconds, t+0.3 seconds, t+0.4, and t+0.5 seconds in the second power mode 303 are greater than or equal to 45 W, the processor 120 may set the interface 177 to supply power in the first power mode 304.

The power consumed by the electronic device 101 may be measured every 0.1 seconds and the second time may be set to 0.5 seconds. When the magnitudes of the pieces of power consumed by the electronic device 101 measured for 5 cycles (or ticks) in the second power mode 303 are greater than or equal to the first power, the processor 120 may set the interface 177 to supply power in the first power mode 304.

The processor 120 may determine the power consumed by the electronic device 101 while receiving power in the third power mode 302.

The processor 120 may set the interface 177 to supply power in the fourth power mode 301 in which the magnitude of the power that may be supplied is smaller than that of the third power mode 302 when the power consumed by the electronic device 101 during the first time in the third power mode 302 is less than third power set corresponding to the third power mode 302.

For example, when the third power set corresponding to the third power mode 302 is 15 W and the power consumed by the electronic device 101 during the first time in the third power mode 302 is less than 15 W, the processor 120 may set the interface 177 to supply power in the fourth power mode 301. The interface 177 may set the power supply device 401 to supply power in the fourth power mode 301 by communicating with the power supply device 401.

The processor 120 may set the interface 177 based on the average power consumed by the electronic device 101 during the first time in the third power mode 302. For example, when the average power consumed by the electronic device 101 for 1 second in the third power mode 302 is less than 15 W, the processor 120 may set the interface 177 to supply power in the fourth power mode 301.

The processor 120 may set the interface 177 to supply power in the first power mode 304 when the power consumed by the electronic device 101 during the second time, which is shorter than the first time, in the third power mode 302 is greater than or equal to the first power. For example, when the power consumed by the electronic device 101 during the second time in the third power mode 302 is greater than or equal to the first power of 45 W, the processor 120 may set the interface 177 to supply power in the first power mode 304.

For example, the processor 120 may set the interface 177 based on the average power consumed by the electronic device 101 during the second time in the third power mode 302. For example, when the average power consumed by the electronic device 101 during the second time in the third power mode 302 is greater than or equal to the first power, the processor 120 may set the interface 177 to supply power in the first power mode 304.

For example, when the pieces of power consumed by the electronic device 101 detected during the second time in the third power mode 302 are greater than or equal to the first power, the processor 120 may set the interface 177 to supply power in the first power mode 304.

The power consumed may be measured every 0.1 seconds, and when the second time is 0.5 seconds, the power consumed by the electronic device 101 may be measured at t+0.1 seconds, t+0.2 seconds, t+0.3 seconds, t+0.4, and t+0.5 seconds. When the pieces of measured power consumed by the electronic device 101 at t+0.1 seconds, t+0.2 seconds, t+0.3 seconds, t+0.4, and t+0.5 seconds in the third power mode 302 are greater than or equal to 45 W, the processor 120 may set the interface 177 to supply power in the first power mode 304.

The power consumed by the electronic device 101 may be measured every 0.1 seconds and the second time may be set to 0.5 seconds. When the magnitudes of the pieces of power consumed by the electronic device 101 measured for 5 cycles (or ticks) in the third power mode 302 are greater than or equal to the first power, the processor 120 may set the interface 177 to supply power in the first power mode 304.

The processor 120 may set the interface 177 to supply power in the second power mode 303 when the power consumed by the electronic device 101 during the second time, which is shorter than the first time, in the third power mode 302 is greater than or equal to the second power and less than the first power. For example, when the power consumed by the electronic device 101 during the second time in the third power mode 302 is greater than or equal to the second power (27 W) and less than the first power (45 W), the processor 120 may set the interface 177 to supply power in the second power mode 303.

For example, when the pieces of power consumed by the electronic device 101 detected during the second time in the third power mode 302 are greater than or equal to the second power and less than the first power, the processor 120 may set the interface 177 to supply power in the second power mode 303.

The power consumed may be measured every 0.1 seconds, and when the second time is 0.5 seconds, the power consumed by the electronic device 101 may be measured at t+0.1 seconds, t+0.2 seconds, t+0.3 seconds, t+0.4, and t+0.5 seconds. When the pieces of measured power consumed by the electronic device 101 at t+0.1 seconds, t+0.2 seconds, t+0.3 seconds, t+0.4, and t+0.5 seconds in the third power mode 302 are greater than or equal to the second power (27 W) and less than the first power (45 W), the processor 120 may set the interface 177 to supply power in the second power mode 303.

The power consumed by the electronic device 101 may be measured every 0.1 seconds and the second time may be set to 0.5 seconds. When the magnitudes of the pieces of power consumed by the electronic device 101 measured for 5 cycles (or ticks) in the third power mode 302 are greater than or equal to the second power and less than the first power, the processor 120 may set the interface 177 to supply power in the second power mode 303.

For example, the processor 120 may determine an operation mode of the electronic device 101. For example, the operation mode of the electronic device 101 may include a standby mode, a power-off mode, a use mode, or the like. The standby mode may be referred to as power-saving mode and may indicate an operation mode to reduce power consumption occurring when no input is received for a set time. The power-off mode may indicate a state in which the electronic device 101 is powered off. The use mode may indicate a state in which an application, an operating system (OS), or the like are activated by receiving an input from a user.

The processor 120 may set the interface 177 to supply power in the first power mode 304 when the operation mode of the electronic device 101 is changed. For example, when the operation mode of the electronic device 101 is changed to one of the second power mode 303, the third power mode 302, and the fourth power mode 301, the processor 120 may set the interface 177 to supply power in the first power mode 304.

The change in operation mode may include various cases in which the operation mode of the electronic device 101 is changed, such as from a power-off mode to a power-on mode, from a standby mode to a use mode, and from a standby mode to a power-off mode.

The processor 120 may determine whether to recharge the battery 189 based on the charge amount of the battery 189. The battery 189 may be charged using power output from the charging circuitry 210. When charging of the battery 189 is completed, the power output from the charging circuitry 210 may not be input to the battery 189. For example, the processor 120 may control a switch connected between the battery 189 and the charging circuitry 210 and set the switch to an off state when charging of the battery 189 is completed.

After charging of the battery 189 is completed, the charge amount of the battery 189 may decrease due to natural discharge. The processor 120 may monitor the charge voltage and charge amount of the battery 189.

The processor 120 may determine whether to recharge the battery 189 based on the charge amount of the battery 189. When the charge amount of the battery 189 decreases less than or equal to a set charge amount, the processor 120 may recharge the battery 189.

When recharging the battery 189, the processor 120 may set the interface 177 to supply power in the first power mode 304. For example, when recharging the battery 189 in one of the second power mode 303, the third power mode 302, and the fourth power mode 301, the processor 120 may set the interface 177 to supply power in the first power mode 304.

For example, the processor 120 may set pieces of reference power corresponding to a plurality of power supply modes based on power information. When the plurality of power supply modes includes the first power mode 304, the second power mode 303, and the third power mode 302, the processor 120 may determine first reference power corresponding to the first power mode 304, second reference power corresponding to the second power mode 303, and third reference power corresponding to the third power mode 302.

The processor 120 may determine a power supply mode among the plurality of power supply modes based on the reference power and the power consumed by the electronic device 101 during a set time. For example, when a connection of the power supply device 401 is detected, the processor 120 may set the interface 177 to supply power in a power supply mode (e.g., the first power mode 304) in which the magnitude of the power that may be supplied is the maximum.

The processor 120 may then determine the power supply mode by comparing the power consumed by the electronic device 101 during a set time with the reference power.

For example, when the magnitude of the power consumed by the electronic device 101 during the first time in the first power mode 304 or the second power mode 303 is less than the third reference power, the electronic device 101 may set the interface 177 to supply power in the third power mode 302.

For example, when the magnitude of the power consumed by the electronic device 101 during the first time in the first power mode 304 is less than the first reference power and greater than or equal to the second reference power, the electronic device 101 may set the interface 177 to supply power in the second power mode 303.

For example, when the magnitude of the power consumed by the electronic device 101 during the second time, which is shorter than the first time, in the third power mode 302 or the second power mode 303 is greater than or equal to the first reference power, the electronic device 101 may set the interface 177 to supply power in the first power mode 304.

For example, when the magnitude of the power consumed by the electronic device 101 during the second time, which is shorter than the first time, in the third power mode 302 is greater than or equal to the second reference power and less than the first reference power, the electronic device 101 may set the interface 177 to supply power in the second power mode 303.

As shown in FIG. 4, the electronic device 101 may reduce and/or improve the magnitude of the standby power by controlling the power mode according to the magnitude of the power consumed by the electronic device.

When the magnitude of the power consumed by the electronic device 101 is greater than the magnitude of the power input from the external power supply device 401, the power of the battery 189 may be supplied to the system and/or element of the electronic device 101, resulting in the discharge of the battery 189. The electronic device 101 may reduce the power discharge of the battery 189 by changing a power mode to a power mode in which the magnitude of the power that may be supplied is large (e.g., changing from the second power mode 303 or the third power mode 302 to the first power mode 304) based on the power consumed by the electronic device during the second time that is shorter than the first time.

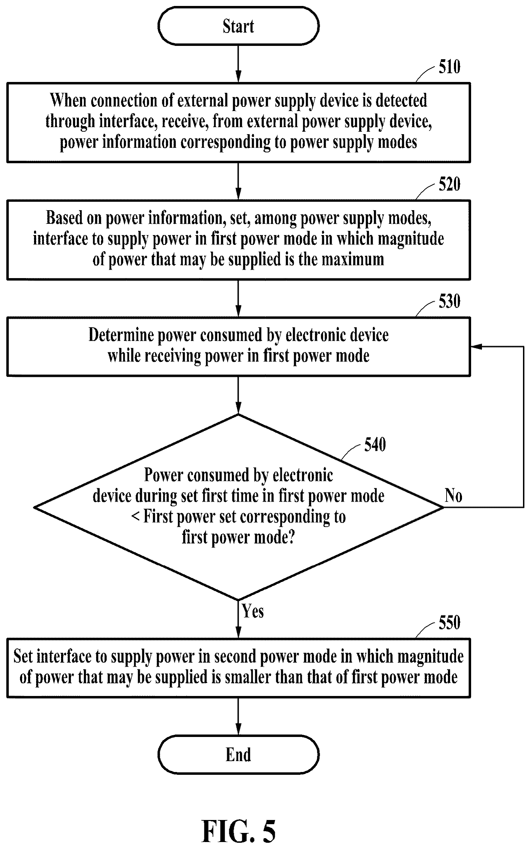

FIG. 5 is a diagram illustrating an operation of a power supply method, according to various embodiments.

In operation 510, when a connection of an external power supply device (e.g., the power supply device 401 of FIG. 4) is detected through an interface (e.g., the interface 177 of FIG. 1), an electronic device (e.g., the electronic device 101 of FIG. 1) may receive, from the external power supply device 401, power information corresponding to a plurality of power supply modes. A processor (e.g., the processor 120 of FIG. 1) of the electronic device 101 may be communicatively connected to the interface 177, and the interface 177 may be communicatively connected to the external power supply device 401 connected through a connecting terminal (e.g., the connecting terminal 178 of FIG. 1). The processor 120 may receive the power information from the external power supply device 401 through the interface 177. The power information may include a PDO and information on the rated voltage, rated current, and rated power of each power supply mode.

In operation 520, based on the power information, the electronic device 101 may set, among the plurality of power supply modes, the interface 177 to supply power in a first power mode (e.g., the first power mode 304 of FIG. 3) in which the magnitude of the power that may be supplied is the maximum.

In operation 530, the electronic device 101 may determine the power consumed by the electronic device 101 while receiving power in the first power mode 304. For example, the processor 120 may identify the power consumed by a system and/or element of the electronic device 101 and the magnitude of the power required for charging a battery (e.g., the battery 189 of FIG. 1). The processor 120 may calculate the magnitude of the power consumed by the electronic device 101 using the voltage and current of the power supplied to the system and/or element of the electronic device 101 and the voltage and current of the power for charging the battery 189.

In operation 540, the electronic device 101 may compare the magnitude of the power consumed by the electronic device 101 during a set first time in the first power mode 304 with the magnitude of first power set corresponding to the first power mode 304.

When it is determined that the magnitude of the power consumed by the electronic device 101 during the first time in the first power mode 304 is smaller than the magnitude of the first power in operation 540, in operation 550, the electronic device 101 may set the interface 177 to supply power in a second power mode (e.g., the second power mode 303 of FIG. 3) in which the magnitude of the power that may be supplied is smaller than that of the first power mode 304.

For example, the electronic device 101 may compare the magnitude of the power consumed by the electronic device 101 during the first time in the first power mode 304 with the first power, second power, and third power, which are set corresponding to each power mode. When the magnitude of the power consumed by the electronic device 101 during the first time in the first power mode 304 is less than the first power and greater than or equal to the second power, the electronic device 101 may set the interface to supply power in the second power mode 303. When the magnitude of the power consumed by the electronic device 101 during the first time in the first power mode 304 is less than the second power and greater than or equal to the third power, the electronic device 101 may set the interface to supply power in the third power mode 302.

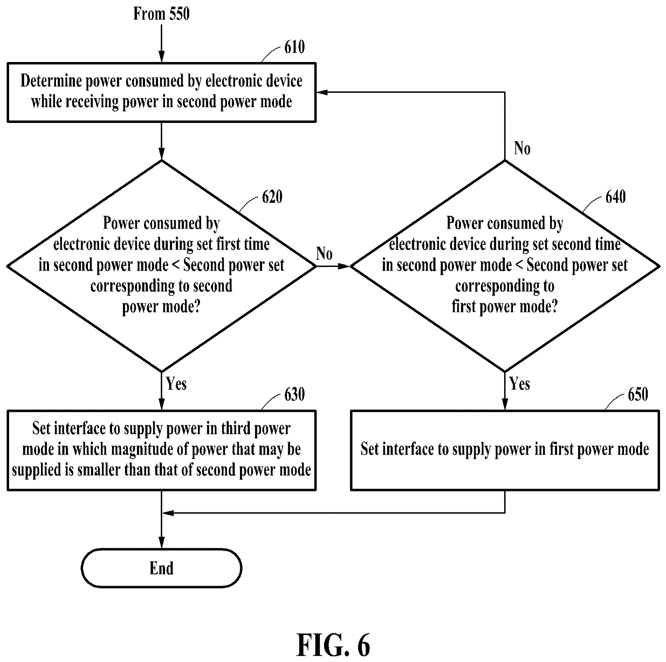

FIG. 6 is a diagram illustrating an operation of an electronic device (e.g., the electronic device 101 of FIG. 1) for setting a power mode according to a magnitude of power consumed in a second power mode (e.g., the second power mode 303 of FIG. 3), according to various embodiments.

In operation 610, the electronic device 101 may determine the power consumed by the electronic device 101 while receiving power in the second power mode 303.

In operation 620, the electronic device 101 may compare the magnitude of the power consumed by the electronic device 101 during a set first time in the second power mode 303 with second power set corresponding to the second power mode 303.

When it is determined that the power consumed by the electronic device 101 during the set first time in the second power mode 303 is less than the second power set corresponding to the second power mode 303 in operation 620, in operation 630, the electronic device 101 may set the interface 177 to supply power in a third power mode (e.g., the third power mode 302 of FIG. 3) in which the magnitude of the power that may be supplied is smaller than that of the second power mode 303.

When it is determined that the power consumed by the electronic device 101 during the set first time in the second power mode 303 is greater than or equal to the second power set corresponding to the second power mode 303 in operation 620, in operation 640, the electronic device 101 may compare the magnitude of the power consumed by the electronic device 101 during a set second time in the second power mode 303 with first power set corresponding to a first power mode (e.g., the first power mode 304 of FIG. 3). The second time may be shorter than the first time.

When it is determined that the magnitude of the power consumed by the electronic device 101 during the second time in the second power mode 303 is greater than the first power in operation 640, in operation 650, the electronic device 101 may set the interface 177 to supply power in the first power mode 304.

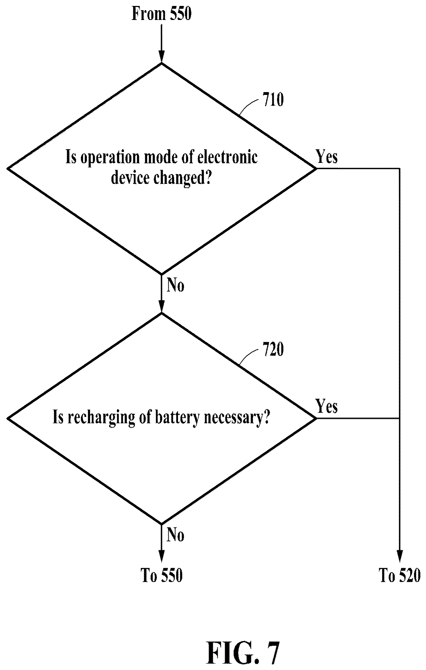

FIG. 7 is a diagram illustrating an operation of an electronic device (e.g., the electronic device 101 of FIG. 1) for setting a power mode according to an operation mode or whether to recharge a battery (e.g., the battery 189 of FIG. 1), according to various embodiments.

In operation 710, the electronic device 101 may determine whether the operation mode of the electronic device 101 is changed.

When it is determined that the operation mode of the electronic device 101 is not changed in operation 710, in operation 720, the electronic device 101 may determine whether the recharging of the battery 189 is necessary.

When it is not determined that the recharging of the battery 189 is not necessary in operation 720, the electronic device 101 may set the interface 177 to supply power in a second power mode (e.g., the second power mode 303 of FIG. 3) according to operation 550.

When it is determined that the operation mode of the electronic device 101 is changed in operation 710 or when it is determined that the recharging of the battery 189 is necessary in operation 720, the electronic device 101 may set the interface 177 to supply power in a first power mode (e.g., the first power mode 304 of FIG. 3) as in operation 520.

FIG. 7 illustrates a case in which the electronic device 101 sets the interface 177 to supply power in the second power mode 303 and receives power from an external power supply device (e.g., the power supply device 401 of FIG. 4) according to the second power mode 303, but embodiments are not limited thereto. For example, even when the electronic device 101 receives power from the external power supply device 401 in a power mode that is different from the second power mode 303, such as the third power mode 302 and the fourth power mode 301, the operations shown in FIG. 7 may apply thereto substantially in the same manner.

It may be understood that the operations shown in FIGS. 5 to 7 are performed by a processor (e.g., the processor 120 of FIG. 1) of the electronic device 101.

The operations shown in FIGS. 5 to 7 may be understood as being substantially the same as the embodiments shown in FIGS. 5 to 7, even when some operations are omitted or the order of some operations is changed.

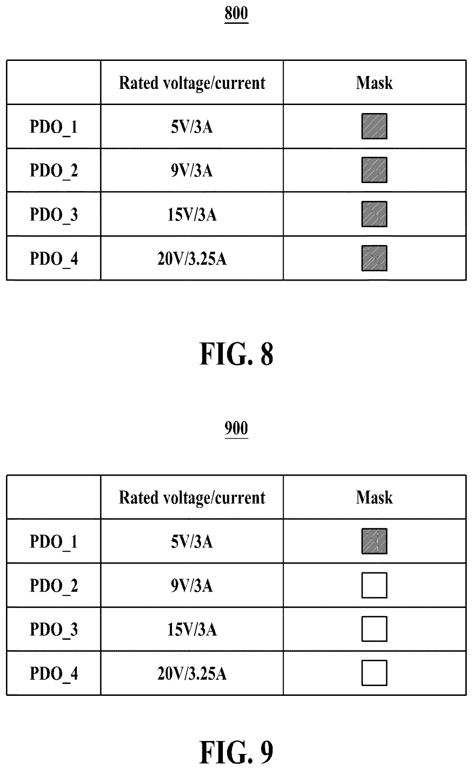

FIGS. 8 and 9 are diagrams illustrating power modes according to various embodiments.

FIG. 8 illustrates power information received by the electronic device 101 when a power supply device (e.g., the power supply device 401 of FIG. 4) may supply power in one of a first power mode (e.g., the first power mode 304 of FIG. 4) (PDO_4 of FIG. 8), a second power mode (e.g., the second power mode 303 of FIG. 3) (PDO_3 of FIG. 8), a third power mode (e.g., the third power mode 302 of FIG. 3) (PDO_2 of FIG. 8), and a fourth power mode (e.g., the fourth power mode 301 of FIG. 3) (PDO_1 of FIG. 8). FIG. 9 illustrates power information received by the electronic device 101 when the power supply device 401 may supply power in the fourth power mode 301 (PDO_1 of FIG. 9).

As shown in FIG. 8, when the power supply device 401 may supply power in one of the first power mode 304 to the fourth power mode 301, the electronic device 101 may mask from the first power mode 304 to the fourth power mode 301. When the power supply device 401 is connected to the electronic device 101, the electronic device 101 may mask from the first power mode 304 to the fourth power mode 301, as shown in FIG. 8, based on the power information. When the power supply device 401 is connected to the electronic device 101, the electronic device 101 may set an interface (e.g., the interface 177 of FIG. 1) to supply power in the first power mode 304 through a negotiation with the power supply device 401.

After the connection of the power supply device 401 is detected and the interface 177 is set in the first power mode 304 through a negotiation, the electronic device 101 may set the interface 177 to supply power in one of the first power mode 304 to the fourth power mode 301 based on the magnitude of the power consumed by the electronic device 101, the magnitudes of the pieces of power set corresponding to the first power mode 304 to the third power mode 302, and a set time.

In the first power mode 304, when the magnitude of the power consumed by the electronic device 101 during a set first time is less than first reference power set corresponding to the first power mode 304, the electronic device 101 may release the mask of the first power mode 304. When the mask of the first power mode 304 is released, the electronic device 101 may control the interface 177 to supply power in the second power mode 303 based on the power information that the mask of the first power mode 304 is released. When the mask of the first power mode 304 is released, the electronic device 101 may control, among the masked power modes, the interface 177 to supply power in the second power mode 303 in which the magnitude of the power that may be supplied is the maximum.

When the mask of the first power mode 304 is released, and in the second power mode 303, the magnitude of the power consumed by the electronic device 101 during a set second time is greater than or equal to the first reference power set corresponding to the first power mode 304, the electronic device 101 may mask the first power mode 304. When the first power mode 304 is masked, the electronic device 101 may control the interface 177 to supply power in the first power mode 304 based on the power information.

As the example described above, the electronic device 101 may set the power information based on the magnitude of the power consumed by the electronic device 101, the magnitudes of the pieces of power set corresponding to the first power mode 304 to the third power mode 302, and the set time. Setting the power information by the electronic device 101 may indicate masking or releasing the mask from the first power mode 304 to the third power mode 302.

In the example described above, the electronic device 101 is described as masking or releasing the mask with respect to the first power mode 304, but embodiments are not limited thereto. For example, the electronic device 101 may mask or release the mask with respect to the second power mode 303 or the third power mode 302 based on the magnitude of the power consumed by the electronic device 101, the magnitudes of the pieces of power set corresponding to the first power mode 304 to the third power mode 302, and the set time. The description of the operation of masking or releasing the mask with respect to the first power mode 304 may be substantially identically applied to the operation of the electronic device 101 to mask or release the mask with respect to the second power mode 303 or the third power mode 302.

For example, the mask in the power mode in which the magnitude of the power that may be supplied by the power supply device 401 is the minimum may not be released. For example, in FIG. 8, the mask of the fourth power mode 301 may not be released regardless of the magnitude of the power consumed by the electronic device 101, the pieces of reference power set corresponding to the first power mode 301 to the third power mode 302, and/or the set time.

FIG. 9 illustrates an example in which the electronic device 101 modifies the power information shown in FIG. 8. The electronic device 101 may modify the power information shown in FIG. 8 like the power information shown in FIG. 9 based on the magnitude of the power consumed by the electronic device 101, the pieces of reference power set corresponding to the first power mode 304 to the third power mode 302, and the set time. When the power information is modified as shown in FIG. 9, the electronic device 101 may control the interface 177 to supply power according to the fourth power mode 301.

In FIGS. 8 and 9, the electronic device 101 may mask or release the mask from the first power mode 304 to the third power mode 302 based on the power information received from the power supply device 401. The electronic device 101 may receive the power information when the power supply device 401 is connected to the electronic device 101. Additionally, the electronic device 101 may request the connected power supply device 401 to transmit the power information, and the power supply device 401 may transmit the power information to the electronic device 101 in response to the request.

In FIGS. 8 and 9, the first power mode 304 may be set to the rated voltage of 20 V, rated current of 3.25 A, and rated power of 65 W, the second power mode 303 may be set to the rated voltage of 15 V, rated current of 3 A, and rated power of 45 W, the third power mode 302 may be set to the rated voltage of 9 V, rated current of 3 A, and rated power of 27 W, and the fourth power mode 301 may be set to the rated voltage of 5 V, rated current of 3 A, and rated power of 15 W, but embodiments are not limited thereto. For example, the number of power modes, and the rated voltage, rated current, and rated power of each power mode may be set differently from the examples shown in FIGS. 8 and 9.

In addition, in FIGS. 8 and 9, first power corresponding to the first power mode 304 may be set to 45 W, second power corresponding to the second power mode 303 may be set to 27 W, and third power corresponding to the third power mode 302 may be set to 15 W, but embodiments are not limited thereto, and the reference power corresponding to each power mode may be set in various ways.

According to an embodiment, the electronic device 101 may determine the magnitude of the reference power corresponding to the power mode based on the magnitude of the rated power of each power mode. For example, based on the magnitudes of the pieces of rated power of the power modes in which the magnitude of the power that may be supplied is smaller than that of the first power mode 304, the electronic device 101 may determine the reference power corresponding to the first power mode 304. The electronic device 101 may determine, among the power modes in which the magnitude of the power that may be supplied is smaller than that of the first power mode 304, the rated power of the second power mode 303 in which the magnitude of the rated power is the maximum to be the first (reference) power corresponding to the first power mode. The electronic device 101 may determine the second (reference) power corresponding to the second power mode 303, the third (reference) power corresponding to the third power mode 302, or the like substantially in the same manner as the example of determining the first (reference) power.

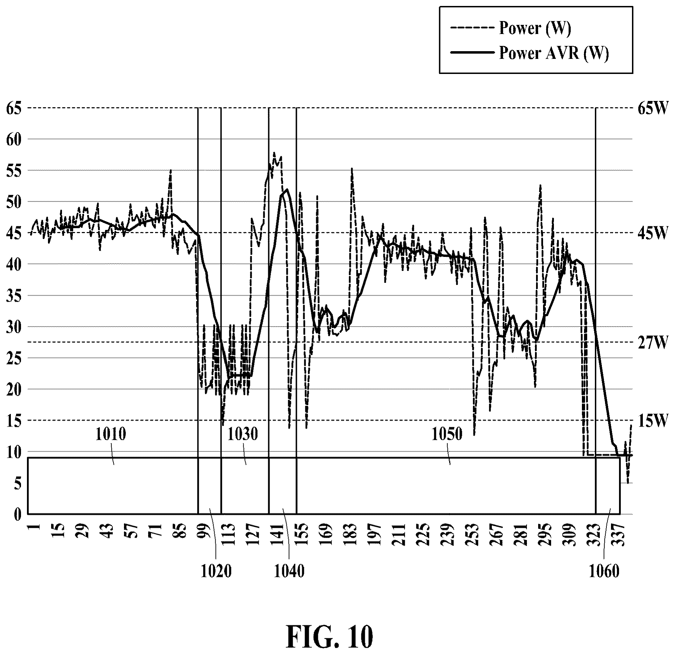

FIG. 10 is a diagram illustrating an operation of setting a power mode according to power consumed by an electronic device (e.g., the electronic device 101 of FIG. 1), according to various embodiments.

As shown in FIG. 10, the electronic device 101 may calculate power (e.g., Power of FIG. 10) and average power (e.g., Power AVR of FIG. 10) consumed by the electronic device 101.

In a section 1010, the electronic device 101 may receive power from the external power supply device 401 according to a first power mode (e.g., the first power mode 304 of FIG. 3). The first power mode 304 may represent a mode that supplies power at the rated voltage of 20 V, rated current of 3.25 A, and rated power of 65 W. First power corresponding to the first power mode 304 may be set to 45 W.

The electronic device 101 may compare the magnitude of the power consumed by the electronic device 101 during a first time in the first power mode 304 with the magnitude of the first power. In a section 1020 where the average power consumed by the electronic device 101 becomes less than or equal to the first power (45 W), the electronic device 101 may set the interface 177 to supply power according to a second power mode (the second power mode 303 of FIG. 3). The electronic device 101 may receive power from the external power supply device 401 according to the second power mode 303 in the section 1020. The second power mode 303 may represent a mode that supplies power at the rated voltage of 15 V, rated current of 3 A, and rated power of 45 W. Second power corresponding to the second power mode 303 may be set to 27 W.

The electronic device 101 may compare the magnitude of the power consumed by the electronic device 101 during the first time in the second power mode 303 with the magnitude of the second power. In a section 1030 where the average power consumed by the electronic device 101 becomes less than or equal to the second power (27 W), the electronic device 101 may set the interface 177 to supply power according to a third power mode (e.g., the third power mode 302 of FIG. 3). The electronic device 101 may receive power from the external power supply device 401 according to the third power mode 302 in the section 1030. The third power mode 302 may represent a mode that supplies power at the rated voltage of 9 V, rated current of 3 A, and rated power of 27 W. Third power corresponding to the third power mode 302 may be set to 15 W.

The electronic device 101 may compare the magnitude of the power consumed by the electronic device 101 during a second time, which is shorter than the first time, in the third power mode 302 with the magnitude of the second power and/or the first power. When the magnitude of the power consumed by the electronic device 101 during the second time is greater than the magnitude of the first power, as in a section 1040, the electronic device 101 may set the interface 177 to supply power in the first power mode 304.

When the average power of the electronic device 101 that receives power according to the first power mode 304 becomes less than or equal to the first power in the section 1040, in a section 1050, the electronic device 101 may set the interface 177 to supply power in the second power mode 303. In a section 1060, when the average power of the electronic device 101 becomes less than or equal to the second power, the electronic device 101 may set the interface 177 to supply power in the third power mode 302. When the average power of the electronic device 101 becomes less than or equal to the third power in the section 1060, the electronic device 101 may set the interface 177 to supply power in a fourth power mode (e.g., the fourth power mode 301 of FIG. 3).

In FIG. 10, there may be a moment when the power consumed by the electronic device 101 is greater than or equal to the first power (45 W) in the section 1050, but since the pieces of power consumed by the electronic device 101 during the set second time are not greater than or equal to the first power, the electronic device 101 may not change the power mode.

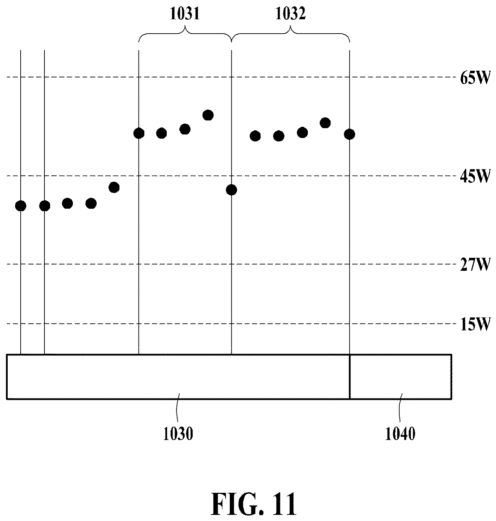

FIG. 11 is a diagram illustrating an operation of an electronic device (e.g., the electronic device 101 of FIG. 1) for setting a power mode from a third power mode (e.g., the third power mode 302 of FIG. 3) to a first power mode (e.g., the first power mode 304 of FIG. 3), according to various embodiments.

FIG. 11 may represent an enlarged view of a portion of the section 1030 and the section 1040 of FIG. 10. Each point in FIG. 11 may represent the magnitude of the power consumed by the measured electronic device 101, which is measured for each measurement cycle.

In FIG. 11, the section 1030 may represent a section in which the electronic device 101 receives power according to the third power mode 302. A second time set in FIG. 11 may be 0.1 seconds, and the measurement cycle of the power consumed by the electronic device 101 may be 0.02 seconds. In FIG. 11, when the electronic device 101 consecutively consumes power by first power or more for 5 ticks of power, the electronic device 101 may set an interface (e.g., the interface 177 of FIG. 1) to supply power in the first power mode 304.

In a section 1031, since the electronic device 101 consecutively consumes power by the first power of 45 W for 4 ticks of power, but the magnitude of the power consumed by the electronic device 101 at the fifth tick is less than or equal to the first power 45 W, the electronic device 101 may maintain the third power mode 302 and receive power from the external power supply device 401.

In a section 1032, since the electronic device 101 consecutively consumes power by the first power or more for 5 ticks, in the section 1040, the electronic device 101 may set the interface 177 to supply power in the first power mode 304.

An electronic device (101), according to various embodiments, may include an interface (e.g., the interface (177) of FIG. 1) connected to an external power supply device (e.g., the power supply device (401) of FIG. 4) capable of supplying power in a plurality of power supply modes and configured to communicate with the external power supply device (401), and a processor (e.g., the processor (120) of FIG. 1). The processor (120) may be configured to receive, from the external power supply device (401), power information corresponding to the plurality of power supply modes when a connection of the external power supply device (401) is detected through the interface (177). The processor (120) may be configured to, based on the power information, set, among the plurality of power supply modes, the interface (177) to supply power in a first power mode (e.g., the first power mode (304) of FIG. 3) in which a magnitude of power capable of being supplied is the maximum. The processor (120) may be configured to determine power consumed by the electronic device (101) while receiving power in the first power mode (304). The processor (120) may be configured to, in the first power mode (304), set the interface (177) to supply power in a second power mode (e.g., the second power mode (303) of FIG. 3) in which a magnitude of power capable of being supplied is smaller than that of the first power mode (304) when power consumed by the electronic device (101) during a set first time is less than first power that is set corresponding to the first power mode (304).

The processor (120) may be configured to determine power consumed by the electronic device (101) while receiving power in the second power mode (303). The processor (120) may be configured to, in the second power mode (303), set the interface (177) to supply power in a third power mode (e.g., the third power mode (302) of FIG. 3) in which a magnitude of power capable of being supplied is smaller than that of the second power mode (303) when power consumed by the electronic device (101) during the set first time is less than second power that is set corresponding to the second power mode (303).

The processor (120) may be configured to determine power consumed by the electronic device (101) while receiving power in the third power mode (302). The processor (120) may be configured to, in the third power mode (302), set the interface (177) to supply power in the first power mode (304) when power consumed by the electronic device (101) during a second time, which is shorter than the set first time, is greater than or equal to the first power. The processor (120) may be configured to, in the third power mode (302), set the interface (177) to supply power in the second power mode (303) when power consumed by the electronic device (101) during the second time is greater than or equal to the second power and less than the first power.

The processor (120) may be configured to determine power consumed by the electronic device (101) while receiving power in the second power mode (303). The processor (120) may be configured to, in the second power mode (303), set the interface (177) to supply power in the first power mode (304) when power consumed by the electronic device (101) during the second time, which is shorter than the set first time, is greater than or equal to the first power.

The processor (120) may be configured to set the interface (177) to supply power in the first power mode (304) when pieces of power consumed by the electronic device (101), which are detected during the second time, are greater than the first power.

The processor (120) may be configured to set the interface (177) to supply power in the first power mode (304) when an operation mode of the electronic device (101) is changed.

The electronic device (101) may further include a battery (e.g., battery (189) of FIG. 1) that is charged based on power that is input through the interface (177). The processor (120) may be configured to determine whether to recharge the battery (189) based on the amount of charge of the battery (189). The processor (120) may be configured to set the interface (177) to supply power in the first power mode (304) when it is determined that the battery (189) is to be recharged.

An electronic device (101), according to various embodiments, may include an interface (177) connected to an external power supply device (401) capable of supplying power in a plurality of power supply modes and configured to communicate with the external power supply device (401), and a processor (120). The processor (120) may be configured to receive, from the external power supply device (401), power information corresponding to a plurality of power supply modes when a connection of the external power supply device (401) is detected through the interface (177). The processor (120) may be configured to determine pieces of reference power corresponding to the plurality of power supply modes based on the power information. The processor (120) may be configured to determine, among the plurality of power supply modes, a power supply mode based on the pieces of reference power and power consumed by the electronic device (101) during a set time. The processor (120) may be configured to set the interface (177) according to the determined power supply mode.

The processor (120) may be configured to set, among the plurality of power supply modes, the interface (177) to supply power in a first power mode (304) in which a magnitude of power capable of being supplied is the maximum. The processor (120) may be configured to determine power consumed by the electronic device (101) while receiving power in the first power mode (304). The processor (120) may be configured to, in the first power mode (304), set the interface (177) to supply power in a second power mode (303) in which a magnitude of power capable of being supplied is smaller than that of the first power mode (304) when power consumed by the electronic device (101) during a set first time is less than first reference power that is set corresponding to the first power mode (304).

The processor (120) may be configured to determine power consumed by the electronic device (101) while receiving power in the second power mode (303). The processor (120) may be configured to, in the second power mode (303), set the interface (177) to supply power in a third power mode (302) in which a magnitude of power capable of being supplied is smaller than that of the second power mode (303) when power consumed by the electronic device (101) during the set first time is less than second reference power that is set corresponding to the second power mode (303).

The processor (120) may be configured to determine power consumed by the electronic device (101) while receiving power in the second power mode (303). The processor (120) may be configured to, in the second power mode (303), set the interface (177) to supply power in the first power mode (304) when power consumed by the electronic device (101) during a second time, which is shorter than the set first time, is greater than or equal to the first reference power.

The processor (120) may be configured to set the interface (177) to supply power in the first power mode (304) when an operation mode of the electronic device (101) is changed.

The electronic device (101) may further include a battery (189) that is charged based on power that is input through the interface (177). The processor (120) may be configured to determine whether to recharge the battery (189) based on the amount of charge of the battery (189). The processor (120) may be configured to set the interface (177) to supply power in the first power mode (304) when it is determined that the battery (189) is to be recharged.

A method of supplying power, according to various embodiments, may include, when a connection of an external power supply device (401) is detected through an interface (177), receiving, from the external power supply device (401), power information corresponding to a plurality of power supply modes, based on the power information, setting, among the plurality of power supply modes, the interface (177) to supply power in a first power mode (304) in which a magnitude of power capable of being supplied is the maximum, determining power consumed by the electronic device (101) while receiving power in the first power mode (304), and in the first power mode (304), and setting the interface (177) to supply power in a second power mode (303) in which a magnitude of power capable of being supplied is smaller than that of the first power mode (304) when power consumed by the electronic device (101) during a set first time is less than first power that is set corresponding to the first power mode (304), in which the interface (177) may be connected to the external power supply device (401) capable of supplying power in a plurality of power supply modes and is configured to communicate with the external power supply device (401).

The method may further include determining power consumed by the electronic device (101) while receiving power in the second power mode (303) and setting the interface (177) to supply power in a third power mode (302) in which a magnitude of power capable of being supplied is smaller than that of the second power mode (303) when power consumed by the electronic device (101) during the set first time in the second power mode (303) is less than second power that is set corresponding to the second power mode (303).

The method may further include determining power consumed by the electronic device (101) while receiving power in the third power mode (302), in the third power mode (302), setting the interface (177) to supply power in the first power mode (304) when power consumed by the electronic device (101) during a second time, which is shorter than the set first time, is greater than or equal to the first power, and in the third power mode (302), setting the interface (177) to supply power in the second power mode (303) when the power consumed by the electronic device (101) during the second time is greater than or equal to the second power and less than the first power.

The method may further include determining power consumed by the electronic device (101) while receiving power in the second power mode (303), and in the second power mode (303), setting the interface (177) to supply power in the first power mode (304) when power consumed by the electronic device (101) during the second time, which is shorter than the first time, is greater than or equal to the first power.

In the second power mode (303), when power consumed by the electronic device (101) during the second time, which is shorter than the first time, is greater than or equal to the first power, the setting of the interface (177) to supply power in the first power mode (304) may include setting the interface (177) to supply power in the first power mode (304) when pieces of power consumed by the electronic device (101), which are detected during the second time, are greater than or equal to the first power.

The method may further include setting the interface (177) to supply power in the first power mode (304) when an operation mode of the electronic device (101) is changed.

The method may further include determining whether to recharge the battery (189) based on the amount of charge of the battery (189) and setting the interface (177) to supply power in the first power mode (304) when it is determined that the battery (189) is to be recharged, in which the battery (189) may be charged based on power that is input through the interface (177).

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms such as "1st," and "2nd," or "first" and "second" may be used to simply distinguish a corresponding component from another, and do not limit the components in other aspect (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., wiredly), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
an interface (177) connected to an external power supply device (401) capable of supplying power in a plurality of power supply modes and configured to communicate with the external power supply device (401); and
a processor (120),
wherein the processor (120) is configured to:
receive, from the external power supply device (401), power information corresponding to a plurality of power supply modes when a connection of the external power supply device (401) is detected through the interface (177);
based on the power information, set, among the plurality of power supply modes, the interface (177) to supply power in a first power mode (304) in which a magnitude of power capable of being supplied is a maximum;
determine power consumed by the electronic device (101) while receiving power in the first power mode (304);
in the first power mode (304), set the interface (177) to supply power in a second power mode (303) in which a magnitude of power capable of being supplied is smaller than that of the first power mode (304) when power consumed by the electronic device (101) during a set first time is less than first power that is set corresponding to the first power mode (304).

2. The electronic device (101) of claim 1, wherein the processor (120) is configured to:
determine power consumed by the electronic device (101) while receiving power in the second power mode (303);
in the second power mode (303), set the interface (177) to supply power in a third power mode (302) in which a magnitude of power capable of being supplied is smaller than that of the second power mode (303) when power consumed by the electronic device (101) during the set first time is less than second power that is set corresponding to the second power mode (303).

3. The electronic device (101) of claim 2, wherein the processor (120) is configured to:
determine power consumed by the electronic device (101) while receiving power in the third power mode (302),
in the third power mode (302), set the interface (177) to supply power in the first power mode (304) when power consumed by the electronic device (101) during a second time, which is shorter than the set first time, is greater than or equal to the first power,
in the third power mode (302), set the interface (177) to supply power in the second power mode (303) when power consumed by the electronic device (101) during the second time is greater than or equal to the second power and less than the first power.

4. The electronic device (101) of one of claims 1 to 3, wherein the processor (120) is configured to:
determine power consumed by the electronic device (101) while receiving power in the second power mode (303);
in the second power mode (303), set the interface (177) to supply power in the first power mode (304) when power consumed by the electronic device (101) during the second time, which is shorter than the set first time, is greater than or equal to the first power.

5. The electronic device (101) of one of claims 1 to 4, wherein the processor (120) is configured to set the interface (177) to supply power in the first power mode (304) when pieces of power consumed by the electronic device (101), which are detected during the second time, are greater than the first power.

6. The electronic device (101) of one of claims 1 to 5, wherein the processor (120) is configured to set the interface (177) to supply power in the first power mode (304) when an operation mode of the electronic device (101) is changed.

7. The electronic device (101) of one of claims 1 to 6, further comprising:
a battery (189) that is charged based on power that is input through the interface (177),
wherein the processor (120) is configured to:
determine whether to recharge the battery (189) based on an amount of charge of the battery (189);
set the interface (177) to supply power in the first power mode (304) when it is determined that the battery (189) is to be recharged.

8. An electronic device (101) comprising:
an interface (177) connected to an external power supply device (401) capable of supplying power in a plurality of power supply modes and configured to communicate with the external power supply device (401); and
a processor (120),
wherein the processor (120) is configured to:
receive, from the external power supply device (401), power information corresponding to a plurality of power supply modes when a connection of the external power supply device (401) is detected through the interface (177);
determine pieces of reference power corresponding to the plurality of power supply modes based on the power information;
determine, among the plurality of power supply modes, a power supply mode based on the pieces of reference power and power consumed by the electronic device (101) during a set time,
set the interface (177) according to the determined power supply mode.

9. The electronic device (101) of claim 8, wherein the processor (120) is configured to:
set, among the plurality of power supply modes, the interface (177) to supply power in a first power mode (304) in which a magnitude of power capable of being supplied is a maximum;
determine power consumed by the electronic device (101) while receiving power in the first power mode (304);
in the first power mode (304), set the interface (177) to supply power in a second power mode (303) in which a magnitude of power capable of being supplied is smaller than that of the first power mode (304) when power consumed by the electronic device (101) during a set first time is less than first reference power that is set corresponding to the first power mode (304).

10. The electronic device (101) of one of claims 8 and 9, wherein the processor (120) is configured to:
determine power consumed by the electronic device (101) while receiving power in the second power mode (303);
in the second power mode (303), set the interface (177) to supply power in a third power mode (302) in which a magnitude of power capable of being supplied is smaller than that of the second power mode (303) when power consumed by the electronic device (101) during the set first time is less than second reference power that is set corresponding to the second power mode (303).

11. The electronic device (101) of one of claims 8 to 10, wherein the processor (120) is configured to:
determine power consumed by the electronic device (101) while receiving power in the second power mode (303);
in the second power mode (303), set the interface (177) to supply power in the first power mode (304) when power consumed by the electronic device (101) during a second time, which is shorter than the set first time, is greater than or equal to the first reference power.

12. The electronic device (101) of one of claims 8 to 11, wherein the processor (120) is configured to set the interface (177) to supply power in the first power mode (304) when an operation mode of the electronic device (101) is changed.

13. The electronic device (101) of one of claims 8 to 12, further comprising:
a battery (189) that is charged based on power that is input through the interface (177),
wherein the processor (120) is configured to:
determine whether to recharge the battery (189) based on an amount of charge of the battery (189);
set the interface (177) to supply power in the first power mode (304) when it is determined that the battery (189) is to be recharged.

14. A method of supplying power, the method comprising:
when a connection of an external power supply device (401) is detected through an interface (177), receiving, from the external power supply device (401), power information corresponding to a plurality of power supply modes;
based on the power information, setting, among the plurality of power supply modes, the interface (177) to supply power in a first power mode (304) in which a magnitude of power capable of being supplied is a maximum;
determining power consumed by the electronic device (101) while receiving power in the first power mode (304); and
in the first power mode (304), setting the interface (177) to supply power in a second power mode (303) in which a magnitude of power capable of being supplied is smaller than that of the first power mode (304) when power consumed by the electronic device (101) during a set first time is less than first power that is set corresponding to the first power mode (304),
wherein the interface (177) is connected to the external power supply device (401) capable of supplying power in a plurality of power supply modes and is configured to communicate with the external power supply device (401).

15. The method of claim 14, further comprising:
determining power consumed by the electronic device (101) while receiving power in the second power mode (303); and
setting the interface (177) to supply power in a third power mode (302) in which a magnitude of power capable of being supplied is smaller than that of the second power mode (303) when power consumed by the electronic device (101) during the set first time in the second power mode (303) is less than second power that is set corresponding to the second power mode (303).
